# EUROPEAN PATENT APPLICATION

(11) **EP 4 741 271 A1**
(43) Date of publication of application: **13.05.2026**
(21) Application number: 25209559.1
(22) Date of filing: 17.10.2025
(51) Int. Cl.: B62M 1/10, B62M 9/10, F16F 15/123

(54) **BICYCLE POWER TRANSMISSION DEVICE**

(30) Priority: 06.11.2024 JP 2024194360
(71) Applicant: Exedy Corporation, Neyagawa-shi, Osaka 572-8570 (JP)
(72) Inventor: HARIMA, Kenji, Osaka, 572-8570 (JP); OHSHIMA, Hiroshi, Osaka, 572-8570 (JP)
(74) Representative: KASTEL Patentanwälte PartG mbB

(57) **Abstract**

It is intended to inhibit first and second plates from being abraded. A coil spring is disposed in a first window portion of a first plate, a second window portion of a second plate, and an accommodation hole of a first rotor. The first plate includes a first contact surface and a first cutout portion. The first contact surface is in contact with an end surface of a coil spring. The first cutout portion is provided in the first contact surface. The second plate includes a second contact surface and a second cutout portion. The second contact surface is in contact with the end surface of the coil spring. The second cutout portion is provided in the second contact surface.

## Description

### CROSS-REFERENCE TO RELATED APPLICATIONS

This application is based on and claims the priority benefit of Japanese application No. 2024-194360 filed on November 6, 2024, the contents of which are incorporated herein by reference.

### TECHNICAL FIELD

The present invention relates to a bicycle power transmission device.

### BACKGROUND

A bicycle power transmission device includes a first rotor, a first plate, and a second plate (see e.g., Japan Laid-open Patent Application Publication No. 2024-084007). The first and second plates are configured to be rotated unitarily with each other. The first rotor and both the first and second plates are elastically coupled to each other through coil springs. When described in detail, the coil springs are disposed in accommodation holes of the first rotor, window portions of the first plate, and window portions of the second plate, respectively.

### SUMMARY OF THE INVENTION

When the bicycle power transmission device is used, it is concerned that the coil springs are rotated in the window portions of the first plate and those of the second plate, respectively, whereby the first and second plates are abraded. In view of this, it is an object of the present invention to inhibit the first and second plates from being abraded.

A bicycle power transmission device according to a first aspect includes a first rotor, a first plate, a second plate, and a coil spring. The first rotor includes an accommodation hole. The first plate includes a first window portion. The first plate is disposed to be rotatable relative to the first rotor. The second plate includes a second window portion. The second plate is configured to be rotated unitarily with the first plate. The second plate is disposed to interpose the first rotor together with the first plate therebetween in an axial direction. The coil spring is disposed in the first window portion, the second window portion, and the accommodation hole. The coil spring elastically couples the first rotor and both the first and second plates therethrough to each other. The first plate includes a first contact surface and a first cutout portion. The first contact surface is in contact with an end surface of the coil spring. The first cutout portion is provided in the first contact surface. The second plate includes a second contact surface and a second cutout portion. The second contact surface is in contact with the end surface of the coil spring. The second cutout portion is provided in the second contact surface.

According to the configuration, the first contact surface is provided with the first cutout portion; hence, on the first contact surface, a part disposed radially outside the first cutout portion and that disposed radially inside the first cutout portion become likely to deform to follow the rotation of the coil spring. As a result, the coil spring is inhibited from being rotated relative to the first contact surface, whereby it is made possible to inhibit the first plate from being abraded. Likewise, the second contact surface is provided with the second cutout portion as well; hence, it is made possible to inhibit the second plate from being abraded.

A bicycle power transmission device according to a second aspect relates to the bicycle power transmission device according to the first aspect and is configured as follows. The first plate includes a first offset portion. The first offset portion is disposed radially inside the first cutout portion. The first offset portion is offset toward the first rotor.

A bicycle power transmission device according to a third aspect relates to the bicycle power transmission device according to the second aspect and is configured as follows. The second plate includes a second offset portion. The second offset portion is disposed radially inside the second cutout portion. The second offset portion is offset toward the first rotor.

A bicycle power transmission device according to a fourth aspect relates to the bicycle power transmission device according to the second or third aspect and is configured as follows. The coil spring is not in contact with the first offset portion.

**A** bicycle power transmission device according to a fifth aspect relates to the bicycle power transmission device according to any of the first to fourth aspects and is configured as follows. The first rotor includes a third contact surface. The third contact surface is in contact with the coil spring. The first rotor is not provided with a cutout portion in the third contact surface.

Overall, according to the present invention, it is made possible to inhibit the first and second plates from being abraded.

### BRIEF DESCRIPTION OF THE DRAWINGS

FIG. 1 is a cross-sectional view of a bicycle power transmission device.
FIG. 2 is a front view of the bicycle power transmission device.
FIG. 3 is a front view of a first rotor.
FIG. 4 is a front view of a first plate.
FIG. 5 is a cross-sectional view of the first plate taken along line V-V in FIG. 4.
FIG. 6 is a front view of a second plate.
FIG. 7 is a cross-sectional view of the second plate taken along line VII-VII in FIG. 6.
FIG. 8 is a side view of a stopper member.

### DETAILED DESCRIPTION

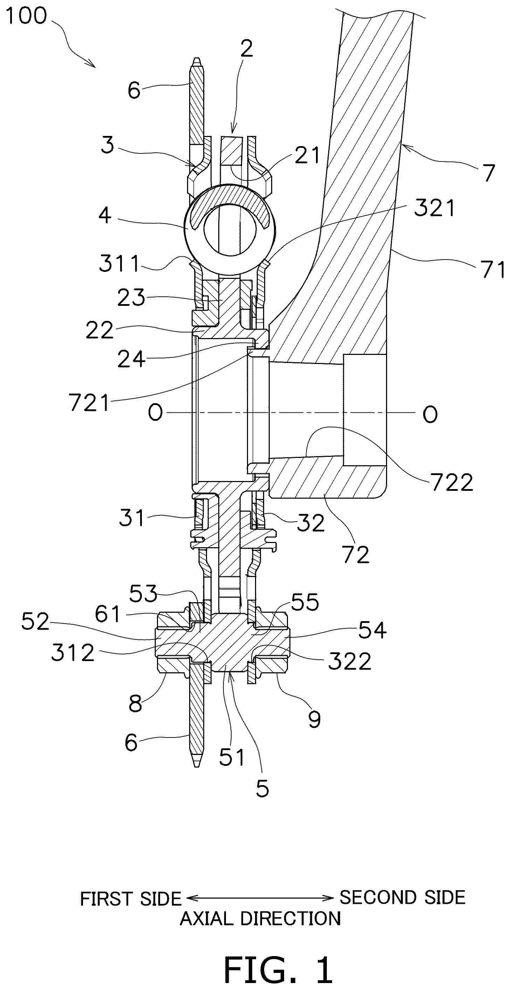

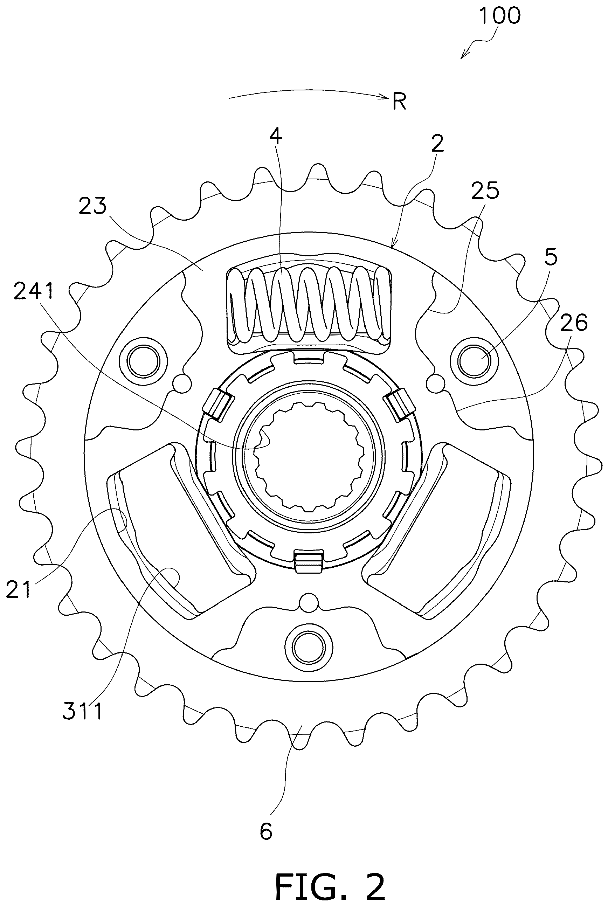

**A** bicycle power transmission device 100 according to the present preferred embodiment (hereinafter simply referred to as "power transmission device 100" on an as-needed basis) will be hereinafter explained with reference to drawings. It should be noted that in the following explanation, the term "axial direction" refers to an extending direction of a rotational axis O of the power transmission device 100. On the other hand, the term "circumferential direction" refers to a circumferential direction of an imaginary circle about the rotational axis O, whereas the term "radial direction" refers to a radial direction of the imaginary circle about the rotational axis O. The term "first side in the axial direction" indicates the left side in FIG. 1, whereas the term "second side in the axial direction" indicates the right side in FIG. 1. Yet on the other hand, the term "rotational direction R" refers to a direction that the power transmission device 100 is rotated in traveling of a bicycle in which the power transmission device 100 is installed. The rotational direction R indicates the clockwise direction in FIG. 2.

FIG. 1 is a cross-sectional view of the power transmission device 100. As shown in FIG. 1, the power transmission device 100 includes a first rotor 2, a second rotor 3, a plurality of coil springs 4, a plurality of stopper members 5, a sprocket 6, a crank arm 7, a plurality of first nuts 8, and a plurality of second nuts 9. The power transmission device 100 is disposed to be rotatable about the rotational axis O.

The power transmission device 100 is installed in the bicycle. For example, the power transmission device 100 is installed in a type of bicycle without including an electric motor or so forth, i.e., a type of bicycle driven only by a human power. It should be noted that the power transmission device 100 may be installed in another type of bicycle including an electric motor. In this case, for instance, the bicycle may have two modes: an electric mode for driving the bicycle only by the electric motor and a human power mode for driving the bicycle only by the human power. It should be noted that the bicycle may have an assist mode for driving the bicycle by both the electric motor and the human power, or alternatively, may not have the assist mode. The power transmission device 100 is configured to transmit a torque, inputted to a pedal (omitted in illustration) attached to a distal end of the crank arm 7, to a drive wheel (omitted in illustration).

FIG. 2 is a front view of the power transmission device 100 from which some of the coil springs 4, the crank arm 7, and a second plate 32 of the second rotor 3 (to be described) are detached. As shown in FIG. 2, the power transmission device 100 is configured to be rotated in the rotational direction R (clockwise in FIG. 2).

### <First Rotor>

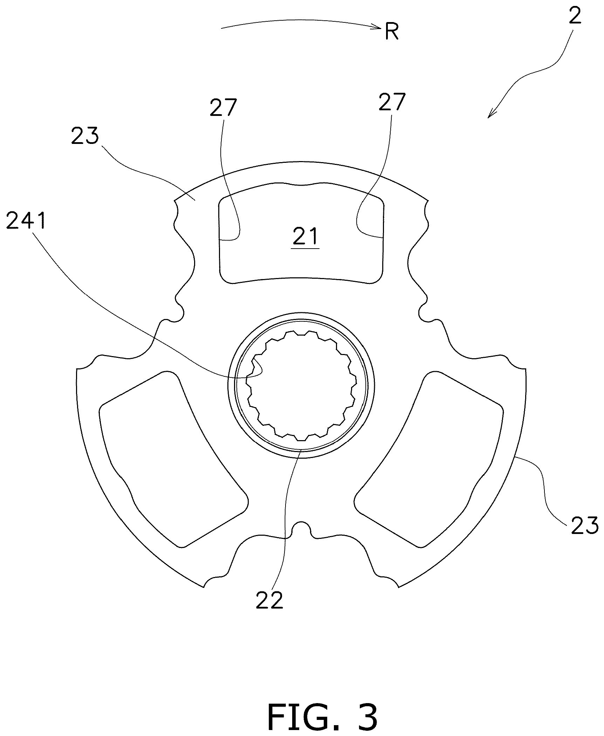

FIG. 3 is a front view of the first rotor 2. As shown in FIG. 3, the first rotor 2 includes a plurality of accommodation holes 21. It should be noted that in the present preferred embodiment, the first rotor 2 includes three accommodation holes 21. The accommodation holes 21 penetrate the first rotor 2 in the axial direction. The accommodation holes 21 are disposed at intervals in the circumferential direction. The accommodation holes 21 are disposed at equal intervals.

**The** first rotor 2 includes a plurality of third contact surfaces 27. The third contact surfaces 27 are surfaces in contact with the coil springs 4. When described in detail, among the surfaces by which each accommodation hole 21 is defined, each third contact surface 27 is the one in contact with an end surface of each coil spring 4. In other words, the first rotor 2 includes a pair of third contact surfaces 27 in each accommodation hole 21. Both the pair of third contact surfaces 27 are opposed to each other, while being oriented in the circumferential direction. Each third contact surface 27 is not provided with a cutout. In other words, each third contact surface 27 extends straight as seen in the axial direction.

The first rotor 2 is disposed to be rotatable in the rotational direction R. The first rotor 2 receives the torque inputted thereto from the crank arm 7. The first rotor 2 is configured to be rotated unitarily with the crank arm 7.

As shown in FIGS. 1 to 3, the first rotor 2 includes a hub portion 22, an outer flanged portion 23, and an inner flanged portion 24. The hub portion 22 is made in the shape of a cylinder extending in the axial direction. In a condition that the power transmission device 100 has been installed in the bicycle, a crankshaft (omitted in illustration) extends inside the hub portion 22.

The outer flanged portion 23 extends radially outward from the hub portion 22. The outer flanged portion 23 is provided with the accommodation holes 21. The accommodation holes 21 penetrate the outer flanged portion 23 in the axial direction. The outer flanged portion 23 is provided on an axially middle part of the hub portion 22.

The inner flanged portion 24 extends radially inward from the hub portion 22. The inner flanged portion 24 includes a spline hole 241 on the inner peripheral surface thereof. The inner flanged portion 24 is provided on one of the axial ends of the hub portion 22. Specifically, the inner flanged portion 24 is provided on the axially second-side end of the hub portion 22. The inner flanged portion 24 is disposed in a different axial position from the outer flanged portion 23. In other words, the inner flanged portion 24 does not overlap with the outer flanged portion 23 as seen in the radial direction.

**The** first rotor 2 includes a plurality of stopper surfaces 25. When described in detail, the first rotor 2 includes a plurality of cutout portions 26. The cutout portions 26 are disposed at intervals in the circumferential direction. Each cutout portion 26 is disposed between each pair of accommodation holes 21 in the circumferential direction. Each cutout portion 26 opens radially outward. Among the inner wall surfaces by which each cutout portion 26 is defined, the one oriented in the rotational direction R serves as each stopper surface 25.

Each stopper surface 25 is oriented in the circumferential direction. When described in detail, each stopper surface 25 is oriented in the rotational direction R. Each stopper surface 25 is opposed to each stopper portion 51 at an interval in the circumferential direction.

The first rotor 2 can be made of, for instance, iron, stainless steel, carbon fiber reinforced plastics (CFRP), or so forth.

### <Second Rotor>

The second rotor 3 is disposed to be rotatable in the rotational direction R. The second rotor 3 is disposed to be rotatable relative to the first rotor 2. The second rotor 3 includes a first plate 31 and the second plate 32.

The first and second plates 31 and 32 are disposed away from each other at an interval in the axial direction. The first rotor 2 is disposed between the first and second plates 31 and 32. In other words, the first and second plates 31 and 32 are disposed to interpose the first rotor 2 therebetween in the axial direction. When described in detail, the outer flanged portion 23 of the first rotor 2 is disposed axially between the first and second plates 31 and 32. The first plate 31 is disposed on the first side of the outer flanged portion 23 in the axial direction. The second plate 32 is disposed on the second side of the outer flanged portion 23 in the axial direction.

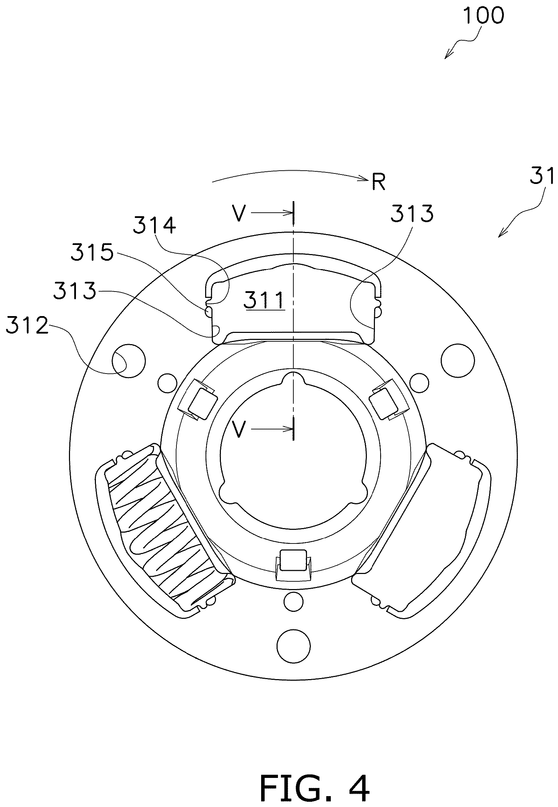

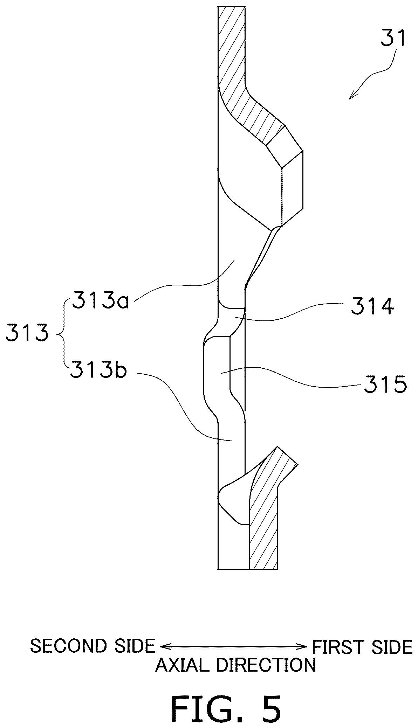

FIG. 4 is a plan view of the first plate 31, whereas FIG. 5 is a cross-sectional view of the first plate 31 taken along line V-V in FIG. 4. As shown in FIGS. 4 and 5, the first plate 31 has a disc shape and includes an opening in a middle part thereof. The hub portion 22 of the first rotor 2 extends inside the opening of the first plate 31 in the axial direction.

The first plate 31 includes a plurality of first window portions 311. In the present preferred embodiment, the first plate 31 includes three first window portions 311. The first window portions 311 penetrate the first plate 31 in the axial direction. The first window portions 311 are disposed away from each other at intervals in the circumferential direction.

The first plate 31 includes a plurality of first through holes 312. The first through holes 312 are disposed away from each other at intervals in the circumferential direction. The first window portions 311 and the first through holes 312 are alternately disposed in the circumferential direction.

The first plate 31 includes a plurality of first contact surfaces 313, a plurality of first cutout portions 314, and a plurality of first offset portions 315. The first contact surfaces 313 are surfaces in contact with the end surfaces of each coil spring 4. When described in detail, among the surfaces by which each first window portions 311 is defined, the first contact surfaces 313 are those in contact with the end surfaces of each coil spring 4. In other words, the first plate 31 includes a pair of first contact surfaces 313 in each first window portion 311. Both the pair of first contact surfaces 313 are opposed to each other, while being oriented in the circumferential direction. Each coil spring 4 is disposed between the pair of first contact surfaces 313.

**The** first cutout portions 314 are provided in the first contact surfaces 313, respectively. The first cutout portions 314 may be formed after or simultaneously when the first window portions 311 are formed.

Each first cutout portion 314 is provided to recess from each first contact surface 313 in the circumferential direction. Each first cutout portion 314 is not in contact with each coil spring 4. Each coil spring 4 is in contact with each first contact surface 313 not only on the radially outer side of each first cutout portion 314 but also on the radially inner side of each first cutout portion 314. Each first contact surface 313 is divided into an outer portion 313a and an inner portion 313b through each first cutout portion 314 serving as a boundary therebetween. Besides, each coil spring 4 is in contact with the outer portion 313a and the inner portion 313b of each first contact surface 313.

Each first offset portion 315 is a portion of each first contact surface 313 and is offset (i.e., displaced) in the axial direction. Each first offset portion 315 is offset toward the outer flanged portion 23. In other words, each first offset portion 315 is offset to the second side in the axial direction. Each first offset portion 315 is disposed radially inside each first cutout portion 314. In other words, each first offset portion 315 is provided in the inner portion 313b of each first contact surface 313. It should be noted that each first offset portion 315 is not in contact with each coil spring 4. Each coil spring 4 is in contact with each first contact surface 313 on the radially inner side of each first offset portion 315.

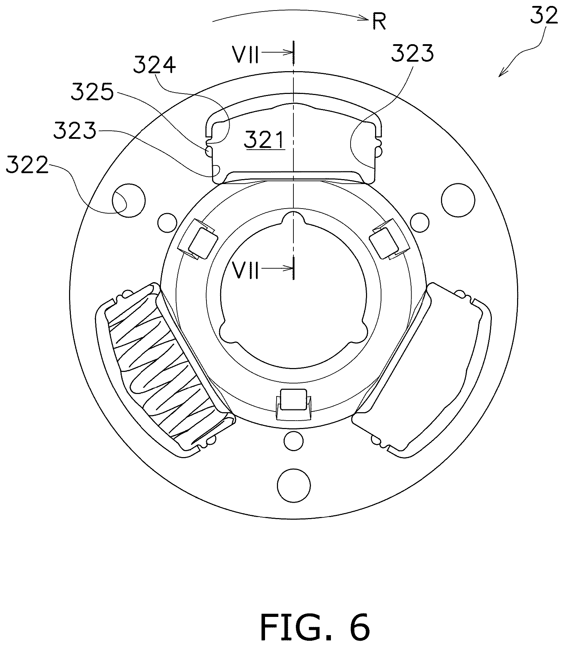

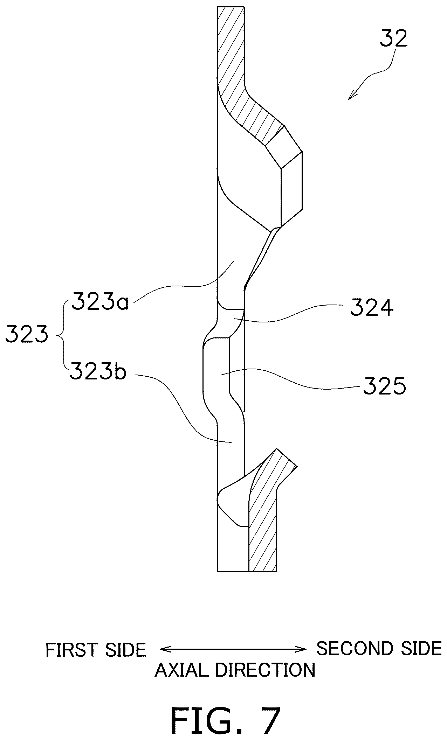

FIG. 6 is a plan view of the second plate 32, whereas FIG. 7 is a cross-sectional view of the second plate 32 taken along line VII-VII in FIG. 6. As shown in FIGS. 6 and 7, the second plate 32 has a disc shape and includes an opening in a middle part thereof. The hub portion 22 of the first rotor 2 extends inside the opening of the second plate 32 in the axial direction. The second plate 32 is configured to be rotated unitarily with the first plate 31. When described in detail, the first and second plates 31 and 32 are fastened to each other by the plural stopper members 5.

The second plate 32 includes a plurality of second window portions 321. In the present preferred embodiment, the second plate 32 includes three second window portions 321. The second window portions 321 penetrate the second plate 32 in the axial direction. The second window portions 321 are disposed away from each other at intervals in the circumferential direction. As seen in the axial direction, the second window portions 321 overlap with the first window portions 311 on a one-to-one correspondence.

The second plate 32 includes a plurality of second through holes 322. The second through holes 322 are disposed away from each other at intervals in the circumferential direction. The second window portions 321 and the second through holes 322 are alternately disposed in the circumferential direction. As seen in the axial direction, the second through holes 322 overlap with the first through holes 312 on a one-to-one correspondence.

The second plate 32 includes a plurality of second contact surfaces 323, a plurality of second cutout portions 324, and a plurality of second offset portions 325. The second contact surfaces 323 are surfaces in contact with the end surfaces of each coil spring 4. When described in detail, among the surfaces by which each second window portion 321 is defined, the second contact surfaces 323 are those in contact with the end surfaces of each coil spring 4. In other words, the second plate 32 includes a pair of second contact surfaces 323 in each second window portion 321. Both the pair of second contact surfaces 323 are opposed to each other, while being oriented in the circumferential direction. Each coil spring 4 is disposed between the pair of second contact surfaces 323.

The second cutout portions 324 are provided in the second contact surfaces 323, respectively. The second cutout portions 324 may be formed after or simultaneously when the second window portions 321 are formed.

Each second cutout portion 324 is provided to recess from each second contact surface 323 in the circumferential direction. Each second cutout portion 324 is not in contact with each coil spring 4. Each coil spring 4 is in contact with each second contact surface 323 not only on the radially outer side of each second cutout portion 324 but also on the radially inner side of each second cutout portion 324. Each second contact surface 323 is divided into an outer portion 323a and an inner portion 323b through each second cutout portion 324 serving as a boundary therebetween. Besides, each coil spring 4 is in contact with the outer portion 323a and the inner portion 323b of each second contact surface 323.

Each second offset portion 325 is a portion of each second contact surface 323 and is offset in the axial direction. Each second offset portion 325 is offset toward the outer flanged portion 23. In other words, each first offset portion 315 is offset to the first side in the axial direction. Each second offset portion 325 is disposed radially inside each second cutout portion 324. In other words, each second offset portion 325 is provided in the inner portion 323b of each second contact surface 323. It should be noted that each second offset portion 325 is not in contact with each coil spring 4. Each coil spring 4 is in contact with each second contact surface 323 on the radially inner side of each second offset portion 325.

**The** first and second plates 31 and 32 can be made of, for instance, iron, stainless steel, carbon fiber reinforced plastics (CFRP), or so forth.

### <Coil Springs>

The coil springs 4 are accommodated in the accommodation holes 21, the first window portions 311, and the second window portions 321, respectively. The coil springs 4 elastically couple the first rotor 2 and both the first and second plates 31 and 32 therethrough to each other in the rotational direction R. In other words, the torque, outputted from the first rotor 2, is transmitted to the first and second plates 31 and 32 through the coil springs 4. Besides, the coil springs 4 are rotated together with the first rotor 2, the first plate 31, and the second plate 32. When the torque is transmitted, the coil springs 4 are compressed, whereby torsion (relative rotation) is caused between the first rotor 2 and the second rotor 3. When the coil springs 4 are not being compressed, the torsion is not caused between the first rotor 2 and the second rotor 3; hence, the angle of torsion is 0 degrees.

In each first window portion 311, each coil spring 4 is in contact at one end surface thereof with one of the pair of first contact surfaces 313, i.e., the one oriented in the rotational direction R. On the other hand, in each first window portion 311, each coil spring 4 is in contact at the other end surface thereof with the other of the pair of first contact surfaces 313, i.e., the one oriented opposite to the rotational direction R.

In each second window portion 321, each coil spring 4 is in contact at one end surface thereof with one of the pair of second contact surfaces 323, i.e., the one oriented in the rotational direction R. On the other hand, in each second window portion 321, each coil spring 4 is in contact at the other end surface thereof with the other of the pair of second contact surfaces 323, i.e., the one oriented opposite to the rotational direction R.

In each accommodation hole 21, each coil spring 4 is in contact at one end surface thereof with one of the pair of third contact surfaces 27, i.e., the one oriented in the rotational direction R. On the other hand, in each accommodation hole 21, each coil spring 4 is in contact at the other end surface thereof with the other of the pair of third contact surfaces 27, i.e., the one oriented opposite to the rotational direction R.

### <Sprocket>

As shown in FIG. 1, the sprocket 6 is attached to the first plate 31. The sprocket 6 is attached to the first plate 31 by the stopper members 5, the first nuts 8, and the second nuts 9. The sprocket 6 is rotated unitarily with the first and second plates 31 and 32. The sprocket 6 includes a plurality of teeth on the outer peripheral end thereof. A chain (omitted in illustration) is wrapped around the sprocket 6, whereby the torque is transmitted from the sprocket 6 to the drive wheel (omitted in illustration) through the chain and so forth.

The sprocket 6 includes a plurality of engaging holes 61. The engaging holes 61 are disposed away from each other at intervals in the circumferential direction. As seen in the axial direction, the engaging holes 61 overlap with not only the first through holes 312 but also the second through holes 322 on a one-to-one correspondence.

### <Stopper Members>

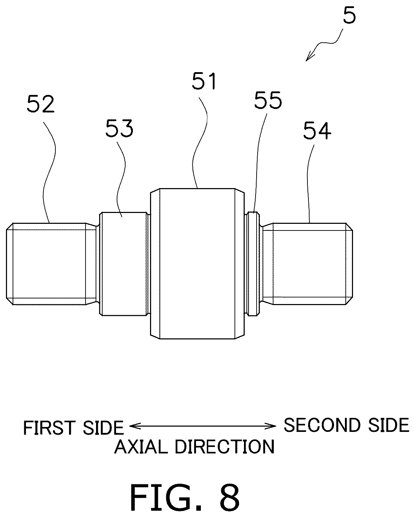

FIG. 8 is a side view of each stopper member 5. As shown in FIGS. 1 and 8, the stopper members 5 fasten the first and second plates 31 and 32 therethrough to each other in cooperation with the first nuts 8 and the second nuts 9 such that the first and second plates 31 and 32 are made detachable from each other. Besides, the sprocket 6 is fastened to the first plate 31 by the stopper members 5 and the first nuts 8. The stopper members 5 are attached to the second rotor 3. The stopper members 5 are configured to be rotated unitarily with the second rotor 3.

Each stopper member 5 includes the stopper portion 51, a first screw portion 52, a first intermediate portion 53, a second screw portion 54, and a second intermediate portion 55. The stopper portion 51, the first screw portion 52, the first intermediate portion 53, the second screw portion 54, and the second intermediate portion 55 are integrated with each other. When described in detail, the stopper portion 51, the first screw portion 52, the first intermediate portion 53, the second screw portion 54, and the second intermediate portion 55 are integrated as a single member. Each stopper member 5 is solid and the interior thereof is not hollowed out.

The stopper portion 51 has a columnar shape. The stopper portion 51 extends in the axial direction. The stopper portion 51 is opposed to each stopper surface 25 in the circumferential direction. The stopper portion 51 is disposed axially between the first plate 31 and the second plate 32. The stopper portion 51 is sandwiched by the first plate 31 and the second plate 32. The stopper portion 51 is disposed in each cutout portion 26 of the first rotor 2.

The first screw portion 52 is integrated with the stopper portion 51. The first screw portion 52 extends in the axial direction. The first screw portion 52 is provided with threads on the outer peripheral surface thereof. The first screw portion 52 is smaller in outer diameter than the stopper portion 51.

**The** first screw portion 52 is disposed on the first side of the stopper portion 51 in the axial direction. The first screw portion 52 is disposed on the first side of the first plate 31 in the axial direction. Besides, the first screw portion 52 is disposed on the first side of the sprocket 6 in the axial direction.

The first intermediate portion 53 is disposed axially between the stopper portion 51 and the first screw portion 52. Specifically, the first intermediate portion 53 extends from the stopper portion 51 to the first side in the axial direction. Besides, the first screw portion 52 extends from the first intermediate portion 53 to the first side in the axial direction.

The first intermediate portion 53 has a columnar shape. The first intermediate portion 53 extends in the axial direction. The length of the first intermediate portion 53 is smaller in magnitude than the total thickness of the first plate 31 and the sprocket 6. Besides, the length of the first intermediate portion 53 is larger in magnitude than the thickness of the first plate 31. It should be noted that the length of each portion in each stopper member 5 means the axial dimension thereof.

The first intermediate portion 53 is smaller in outer diameter than the stopper portion 51 but is larger in outer diameter than the first screw portion 52. The first intermediate portion 53 is disposed inside each first through hole 312 and each engaging hole 61. The first intermediate portion 53 does not protrude from inside each first through hole 312 and each engaging hole 61 to the first side in the axial direction.

The second screw portion 54 is integrated with the stopper portion 51. The second screw portion 54 extends in the axial direction. The second screw portion 54 is provided with threads on the outer peripheral surface thereof. The second screw portion 54 is smaller in outer diameter than the stopper portion 51. The second screw portion 54 is approximately equal in outer diameter to the first screw portion 52.

The second screw portion 54 is disposed on the second side of the stopper portion 51 in the axial direction. The second screw portion 54 is disposed on the second side of the second plate 32 in the axial direction.

**The** second intermediate portion 55 is disposed axially between the stopper portion 51 and the second screw portion 54. Specifically, the second intermediate portion 55 extends from the stopper portion 51 to the second side in the axial direction. Besides, the second screw portion 54 extends from the second intermediate portion 55 to the second side in the axial direction.

The second intermediate portion 55 has a columnar shape. The second intermediate portion 55 extends in the axial direction. The second intermediate portion 55 is smaller in length than the first intermediate portion 53. The length of the second intermediate portion 55 is smaller in magnitude than the thickness of the second plate 32.

The second intermediate portion 55 is smaller in outer diameter than the stopper portion 51 but is larger in outer diameter than the second screw portion 54. The second intermediate portion 55 is approximately equal in outer diameter to the first intermediate portion 53. The second intermediate portion 55 is disposed inside each second through hole 322. The second intermediate portion 55 does not protrude from inside each second through hole 322 to the second side in the axial direction.

### <First and Second Nuts>

Each first nut 8 is screwed onto the first screw portion 52. In cooperation with the stopper portion 51, each first nut 8 interposes and holds the sprocket 6 and the first plate 31 therebetween. Each first nut 8 is a flanged nut.

Each second nut 9 is screwed onto the second screw portion 54. In cooperation with the stopper portion 51, each second nut 9 interposes and holds the second plate 32 therebetween. Each second nut 9 is a flanged nut.

### <Crank Arm>

The crank arm 7 is configured to be rotated unitarily with the first rotor 2. In other words, the crank arm 7 is disposed to be rotatable about the rotational axis O. The crank arm 7 is attached to the inner flanged portion 24 of the first rotor 2. When described in detail, the crank arm 7 is configured to be spline-coupled to the inner flanged portion 24.

The crank arm 7 includes an arm body 71 and an attachment portion 72. The arm body 71 extends in the radial direction. The attachment portion 72 extends from one of both ends of the arm body 71 in the axial direction. It should be noted that the pedal (omitted in illustration) is attached to the other of both ends of the arm body 71.

The attachment portion 72 is smaller in outer diameter at a distal end 721 thereof than at the remaining part thereof. The distal end 721 is spline-coupled to the inner flanged portion 24. Besides, the distal end 721 penetrates the inner flanged portion 24 in the axial direction. Then, the distal end 721 is fixed to the inner flanged portion 24 by swaging. When described in detail, the distal end 721 and the inner flanged portion 24 are firmly attached to each other by swaging of the distal end 721. Besides, a part of the distal end 721, protruding from the inner flanged portion 24 to the first side in the axial direction, is enlarged in outer diameter by swaging; namely, the outer diameter of the protruding part is made larger in magnitude than the inner diameter of the inner flanged portion 24. As a result, the distal end 721 is prevented from coming off from the inner flanged portion 24; hence, the crank arm 7 and the first rotor 2 can be prevented from moving away from each other to the opposite sides in the axial direction.

The attachment portion 72 includes an attachment hole 722. The attachment hole 722 has a rectangular shape as seen in the axial direction. The crankshaft (omitted in illustration) is fitted to the attachment hole 722, whereby the crank arm 7 is rotated unitarily with the crankshaft.

### <Action>

The action of the power transmission device 100 configured as described above will be explained. First, when a torque is inputted to the first rotor 2 through the crank arm 7 by pedaling of a user, the first rotor 2 is rotated in the rotational direction R. Then, the torque is transmitted from the first rotor 2 to the second rotor 3 through the coil springs 4. As a result, the second rotor 3 is rotated in the rotational direction R, whereby the torque is transmitted to the drive wheel.

Here, when the angle of torsion between the first rotor 2 and the second rotor 3 reaches a predetermined angle by compression of the coil springs 4, the stopper surfaces 25 are contacted with the stopper portions 51, respectively. Thus, when the stopper portions 51 are contacted by the stopper surfaces 25, respectively, the first rotor 2 is restricted from rotating relative to the second rotor 3 any further from the position. In other words, the first rotor 2 is rotated relative to the second rotor 3 until the stopper members 5 are contacted by the stopper surfaces 25, respectively. Then, the first rotor 2 is rotated unitarily with the second rotor 3 after the stopper portions 51 are contacted by the stopper surfaces 25, respectively. The angle of torsion between the first rotor 2 and the second rotor 3 is maximized (hereinafter referred to as "maximum angle of torsion") when the stopper surfaces 25 are contacted with the stopper portions 51, respectively. It should be also noted that the angle of torsion between the first rotor 2 and the second rotor 3 is 0 degrees when the torque has not been inputted to the power transmission device 100.

### [Modifications]

One preferred embodiment of the present invention has been explained above. However, the present invention is not limited to the above, and a variety of changes can be made without departing from the gist of the present invention. It should be noted that basically speaking, respective modifications to be described are applicable simultaneously.
(a) In the preferred embodiment described above, the crank arm 7 is attached to the first rotor 2, whereas the sprocket 6 is attached to the second rotor 3; however, the power transmission device 100 is not limited in configuration to this. For example, the crank arm 7 may be attached to the first or second plate 31, 32 of the second rotor 3, whereas the sprocket 6 may be attached to the first rotor 2.
(b) In the preferred embodiment described above, all the first window portions 311 are each provided with a pair of first cutout portions 314; however, the plate 31 is not limited in configuration to this. For example, each first window portion 311 may be provided with only one first cutout portion 314; alternatively, only one of the plural first window portions 311 may be provided with at least one first cutout portion 314. The configuration herein described is true of the second plate 32 as well.

### LIST OF REFERENCE NUMERALS

2 First rotor
21 Accommodation hole
27 Third contact surface
4 Coil spring
31 First plate
311 First window portion
313 First contact surface
314 First cutout portion
315 First offset portion
32 Second plate
321 Second window portion
323 Second contact surface
324 Second cutout portion
325 Second offset portion
100 Bicycle power transmission device

## Claims

1. A bicycle power transmission device comprising:
a first rotor including an accommodation hole;
a first plate including a first window portion, the first plate disposed to be rotatable relative to the first rotor;
a second plate including a second window portion, the second plate configured to be rotated unitarily with the first plate, the second plate disposed to interpose the first rotor together with the first plate therebetween in an axial direction; and
a coil spring disposed in the first window portion, the second window portion, and the accommodation hole, the coil spring elastically coupling the first rotor and both the first and second plates therethrough to each other, wherein
the first plate includes
a first contact surface being in contact with an end surface of the coil spring, and
a first cutout portion provided in the first contact surface, and
the second plate includes
a second contact surface being in contact with the end surface of the coil spring, and
a second cutout portion provided in the second contact surface.

2. The bicycle power transmission device according to claim 1, wherein the first plate includes a first offset portion, the first offset portion disposed radially inside the first cutout portion, the first offset portion being offset toward the first rotor.

3. The bicycle power transmission device according to claim 2, wherein the second plate includes a second offset portion, the second offset portion disposed radially inside the second cutout portion, the second offset portion being offset toward the first rotor.

4. The bicycle power transmission device according to claim 2, wherein the coil spring is not in contact with the first offset portion.

5. The bicycle power transmission device according to claim 1, wherein the first rotor includes a third contact surface, the third contact surface being in contact with the coil spring, the first rotor not provided with a cutout portion in the third contact surface.
